# EUROPÄISCHE PATENTSCHRIFT

(11) **EP 3 387 276 B1**
(45) Veröffentlichungstag und Bekanntmachung des Hinweises auf die Patenterteilung: **09.09.2020**
(21) Anmeldenummer: 16819801.8
(22) Anmeldetag: 01.12.2016
(51) Int. Cl.: F16C 17/02, F16C 27/02, F16C 43/02

(54) **FOLIENLAGER**
FOIL BEARING
PALIERS À FEUILLES

(30) Priorität: 10.12.2015 DE 102015224866
(43) Veröffentlichungstag der Anmeldung: 17.10.2018
(73) Patentinhaber: Schaeffler Technologies AG & Co. KG, 91074 Herzogenaurach (DE)
(72) Erfinder: BRAUN, Wolfgang, 97493 Garstadt (DE); WEHNER, Simon, 97421 Schweinfurt (DE); WIRTH, Philipp, 97779 Geroda (DE)
(86) Internationale Anmeldenummer: PCT/DE2016/200568
(87) Internationale Veröffentlichungsnummer: WO 2017/097298

(56) Entgegenhaltungen:
- EP-A1- 2 937 584
- WO-A1-2015/125825
- US-A1- 2014 153 850

## Beschreibung

### Gebiet der Erfindung

Die Erfindung betrifft ein Folienlager zum Lagern einer Welle, umfassend ein hülsenartiges Lagergehäuse, wenigstens eine am Innenumfang des Lagergehäuses angeordnete elastische Wellfolie und jeweils eine diese Wellfolie überdeckende, eine Lagerfläche bildende Deckfolie, wobei an der Innenseite des Lagergehäuses Mittel zum Fixieren der genannten Folien vorgesehen sind.

### Hintergrund der Erfindung

Folienlager sind hydrodynamische oder aerodynamische Lager, bei denen bei unbelastetem Lager eine die Welle beziehungsweise eine den drehend gelagerten Rotor abstützende Lagerfläche von einer dünnen und verschleißfesten Deckfolie gebildet ist, welche ihrerseits von einer zwischen Deckfolie und Lagergehäusewand angeordneten elastischen Wellfolie abgestützt wird. Im Betrieb bildet sich zwischen der Welle und der Deckfolie ein hydrodynamischer oder aerodynamischer, die Welle oder den Rotor tragender Film. Nur bei Start- und Stoppvorgängen kommt es zu einem direkten Bewegungskontakt zwischen der Welle und der Deckfolie. Folienlager der beschriebenen Art werden bevorzugt für gering belastete, mit hoher Drehzahl laufende Wellen eingesetzt, beispielsweise bei Kompressoren, Gasturbinen, Turboladern und dergleichen.

Bei bekannten Folienlagern der beschriebenen Art hat sich die Halterung der Folienanordnung im Lagergehäuse, die einerseits eine Fixierung derselben insbesondere in Drehrichtung gewährleistet, andererseits aber wärmebedingte Ausgleichsbewegungen der Folienanordnung zulassen soll, als konstruktiv und fertigungstechnisch sehr schwierig erwiesen.

Aus der US 5,902,049 A1 ist ein als Einflächenlager ausgebildetes Folienlager der im Oberbegriff des Anspruchs 1 genannten Art bekannt, bei welchem die aus Außenfolien, Wellfolien und Deckfolien bestehende Folienanordnung sich in Umfangsrichtung einseitig an einem in geeigneter Weise, beispielsweise durch Schweißen an der Innenseite des Lagergehäuses befestigten Riegel abstützt. Dabei ist eine Endkante der radial inneren Deckfolie an dem Riegel mittels Heft- oder Punktschweißen befestigt, während sich die zugeordneten Endkanten der anderen Folienlagen lediglich einseitig an dem Riegel abstützten. Die den auf diese Weise fixierten Endkanten der Well- und Deckfolien abgewandten Endkanten laufen frei aus, so dass die Folienanordnung dieses bekannten Lagers im Wesentlichen nur für eine Drehrichtung ausreichend fixiert ist. Die beschriebene Halterung der Folienanordnung im Lagergehäuse ist einerseits konstruktiv und fertigungstechnisch äußert aufwendig. Andererseits ist das Lager wegen der einseitigen Fixierung der Folienanordnung nur beschränkt einsetzbar.

In der EP 2 937 584 wird schließlich noch ein als Mehrflächenlager ausgebildetes Folienlager offenbart, welches ein äußeren Lagerring und eine Vielzahl von Folien umfasst, die an der inneren Umfangfläche des äußeren Lagerrings montiert sind. Dazu sind an einer Umfangsseite jeder Folie jeweils zwei äußere Halteabschnitte und an der anderen Umfangsseite jeder Folie jeweils ein mittlerer Halteabschnitt angeordnet, der zwischen die äußeren Halteabschnitte an der einen Umfangsseite der benachbarten Folie eingreift, so dass alle Folien einen vormontierbaren Ring bilden. Die sich somit kreuzenden Halteabschnitte aller Folien werden dann zur Fixierung der Folien in sich kreuzende, schräg von innen nach außen ausgerichteten Stecknuten in der inneren Umfangsfläche des äußeren Lagerring eingeschoben, wobei die Tiefe der Stecknuten der Einstecktiefe der zugeordneten Halteabschnitte entspricht.

### Aufgabe der Erfindung

Ausgehend von den Lösungen des bekannten Standes der Technik liegt der Erfindung somit die Aufgabe zugrunde, ein Folienlager der im Oberbegriff des Anspruchs 1 genannten Art zu schaffen, bei welchem eine konstruktiv und fertigungstechnisch einfache, für beide Drehrichtungen geeignete Fixierung der Folienanordnung verwirklicht ist.

### Beschreibung der Erfindung

Die Lösung dieser Aufgabe ergibt sich aus den Merkmalen des Hauptanspruches 1, während vorteilhafte Ausgestaltungen und Weiterbildungen der Erfindung den abhängigen Ansprüchen entnehmbar sind.

Die Erfindung geht demnach aus von einem Folienlager zum Lagern einer Welle, umfassend ein hülsenartiges Lagergehäuse, wenigstens eine am Innenumfang des Lagergehäuses angeordnete elastische Wellfolie und jeweils eine diese Wellfolie überdeckende, eine Lagerfläche bildende Deckfolie, wobei an der Innenseite des Lagergehäuses Mittel zum Fixieren der genannten Folien in Form von an der Innenseite des Lagergehäuses längs der Mantellinien sich erstreckenden, schräg von innen nach außen ausgerichteten Stecknuten vorgesehen sind. Zur Lösung der gestellten Aufgabe ist vorgesehen, dass die Enden der Stecknuten einander zugerichtet und sich nicht kreuzend mit einem Abstand zueinander angeordnet sind, wobei die Tiefe der Stecknuten größer ist als die Einstecktiefe der zugeordneten Endkanten bei unbelasteter Deckfolie.

Die Montage der Folienanordnung erfolgt zum Beispiel in der Weise, dass zunächst die Wellfolie einer jeweiligen Folienanordnung in das Lagergehäuse eingelegt wird, sodann die jeweils zugeordnete Deckfolie axial in die Stecknuten eingefädelt und sodann vollständig eingeschoben wird. Neben der einfachen Montage der Folienanordnung ergibt sich als weiterer Vorteil, dass das Folienlager keine bevorzugte Drehrichtung mehr aufweist, da die Folienanordnungen für beide Drehrichtungen in gleicher Weise angeordnet und fixiert ist. Eine Demontage und erneute Montage ist außerdem jederzeit leicht möglich. Die Ausbildung der Stecknuten mit einer Tiefe, die größer ist, als die Einstecktiefe der zugeordneten Endkanten bei unbelasteter Deckfolie, erfolgt darüber hinaus aus den Grund, dass sich die Deckfolie unterschiedlichen mechanischen oder thermischen Belastungen anpassen können.

In einer bevorzugten Ausführungsform nehmen die Stecknuten die Endkanten der der Well- und Deckfolien mit einer Gleitpassung auf. Die Stecknuten sind dabei so ausgelegt und bemessen, dass die Endkanten bei allen Betriebsbedingungen von der jeweils zugeordneten Stecknut gehalten und geführt werden.

Bei der bisher beschriebenen Anordnung werden die Wellfolien von der jeweils zugeordneten und diese überdeckenden Deckfolie gehalten. Gemäß einer anderen Ausgestaltung der Erfindung ist vorgesehen, dass die Wellfolien selbst auch in Umfangsrichtung durch Endkanten begrenzt sind, die an den Endkanten der zugeordneten Deckfolien im Wesentlichen parallel anliegen, und dass die Stecknuten so ausgelegt sind, dass diese die parallel aneinander liegenden Endkantenpaare mit Gleitpassung aufnehmen. Auf diese Weise sind die Wellfolien selbst in der gleichen Weise wie die Deckfolien fixiert, also mit der Möglichkeit, sich einer mechanischen oder thermischen Belastung anzupassen.

Die Möglichkeit einer Anpassung an mechanische oder thermische Belastungen ist auch dann noch gegeben, wenn gemäß einer anderen Ausgestaltung der Erfindung im Bereich jeweils einer der beiden einer jeweiligen Folienanordnung zugeordneten Stecknuten eine oder mehrere die Gehäusewand durchsetzende Gewindebohrungen vorgesehen sind, welche die genannten Endkanten in der jeweiligen Stecknut fixierende Klemmschrauben aufnehmen. Diese Klemmschrauben bieten zugleich eine axiale Fixierung der Folienanordnung.

Eine axiale Fixierung der Folienanordnung kann gemäß einer weiteren Ausgestaltung der Erfindung auch dadurch bewerkstelligt werden, dass in wenigstens einer Endkante einer Deckfolie beziehungsweise einem Endkantenpaar einer jeweiligen Folienanordnung eine Ausnehmung ausgebildet ist, in die ein von außen in die Wand des Lagergehäuses bis in die Ausnehmung ragender Bolzen oder dergleichen derart eingreift, dass er die Endkanten in axialer Richtung zwar fixiert, deren Bewegung in Umfangsrichtung jedoch nicht behindert.

Das Folienlager gemäß der Erfindung kann als Einflächenlager mit einer einzigen, den ganzen Innenumfang des Lagergehäuses überdeckenden Folienanordnung oder auch als Mehrflächenlager mit mehreren jeweils Umfangsabschnitte des Lagergehäuses überdeckenden Folienanordnungen ausgebildet sein.

### Kurze Beschreibung der Zeichnungen

Die Erfindung wird nachfolgend in mehreren Ausführungsbeispielen anhand der beigefügten Zeichnungen näher erläutert. Dabei zeigen:
- Figur 1: eine radiale Teil-Schnittansicht eines Folienlagers im Bereich einer Deckfolienfixierung in Umfangsrichtung,
- Figur 2: eine Ansicht ähnlich der in Figur 1 mit einer Anordnung für eine axiale Fixierung der Deckfolie,
- Figur 3: eine Ansicht der Anordnung gemäß der Figur 2 in Richtung des Pfeils III;
- Figur 4: einen Querschnitt durch ein Folienlager, bei welchem die Deckfolie und die Wellfolie in Stecknuten gehalten sind,
- Figur 5: einen Querschnitt durch ein als Dreiflächenlager ausgebildetes Folienlager,
- Figur 6: eine perspektivische Ansicht eines Lagergehäuses mit einer Anordnung zur axialen Fixierung einer Folienanordnung,
- Figur 7: eine Ansicht ähnlich wie die der Figur 6, mit einer Anordnung zur Fixierung einer Folienanordnung in Umfangsrichtung, und
- Figur 8: einen Axialschnitt durch das Lagergehäuse gemäß Figur 7 entlang der Linie VIII-VIII.

### Ausführliche Beschreibung der Zeichnungen

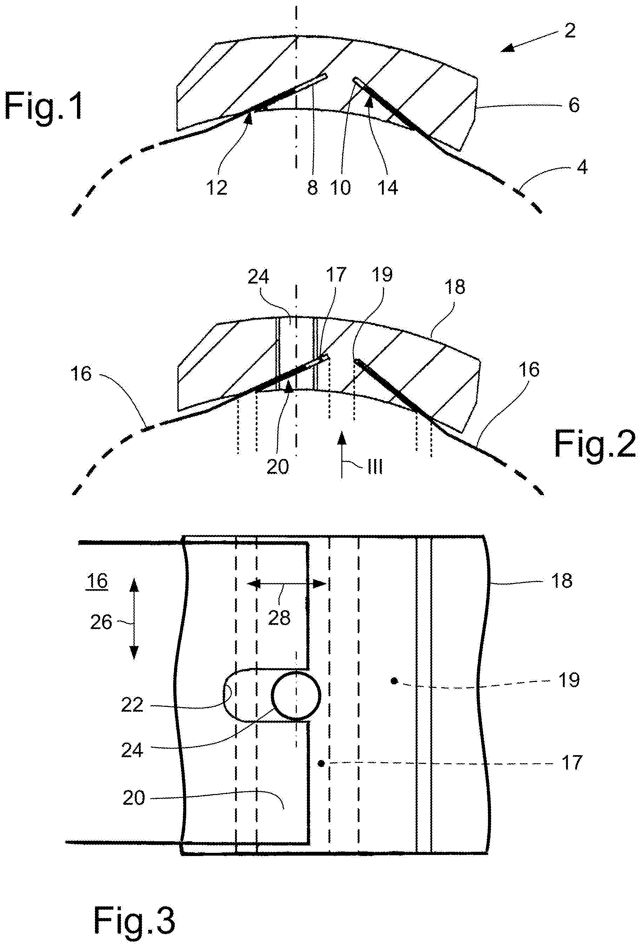

Die Figur 1 zeigt demnach eine Teil-Schnittansicht eines Folienlagers 2 im Bereich einer Fixierungsvorrichtung für eine Deckfolie 4 beispielsweise eines Einflächenlagers. An der Innenseite eines hülsenartigen Lägergehäuses 6 sind schräg von innen nach außen ausgerichtete Stecknuten 8, 10 ausgebildet, in welche die Deckfolie 4 in Umfangsrichtung begrenzende und im Wesentlichen in Umfangsrichtung auslaufende Endkanten 12, 14 eingreifen. Die Tiefe der Stecknuten 8, 10 ist jeweils größer als die Einstecktiefe der zugeordneten Endkanten 12, 14 bei unbelasteter Deckfolie, wobei die Stecknuten 8, 10 die zugeordneten Endkanten 12, 14 jeweils mit einer Gleitpassung aufnehmen. Bei einer mechanischen oder thermischen Belastung der Deckfolie 4 können sich die Endkanten 12, 14 in den zugeordneten Stecknuten 8, 10 verschieben, so dass sich die Deckfolie 4 an die durch die Belastungen verursachten Formänderungen der Folienanordnung anpassen können.

Die Stecknuten 8, 10; 17, 19 erstrecken sich längs der Mantellinien des Lagergehäuses 6, wie insbesondere anhand der Figur 3 erkennbar ist.

Die Figuren 2 und 3 zeigen eine Anordnung zur axialen Fixierung einer Deckfolie 16 in einem Lagergehäuse 18. Die beiden Endkanten 20 der Deckfolie 16 sind in zwei Stecknuten 17, 19 aufgenommen. In wenigstens einer Endkante 20 der Deckfolie 16 ist eine Ausnehmung 22 ausgebildet, in welche ein von außen in die Wand des Lagergehäuses 18 durch die Stecknut 17 hindurch bis in diese Ausnehmung 22 ragender Bolzen 24 oder Stift derart eingreift, dass er die Deckfolie 16 in der durch den Pfeil 26 gekennzeichneten axialen Richtung fixiert, deren Bewegung in der durch den Pfeil 28 gekennzeichneten Umfangsrichtung jedoch nicht behindert.

Es sei hier bemerkt, dass in den Figuren 1 bis 3 eine jeweils zwischen den Deckfolien 4; 16 und den zugeordneten Lagergehäusen 6; 18 angeordnete Wellfolie aus Gründen der besseren Übersichtlichkeit nicht dargestellt ist, jedoch in jedem Fall vorgesehen ist.

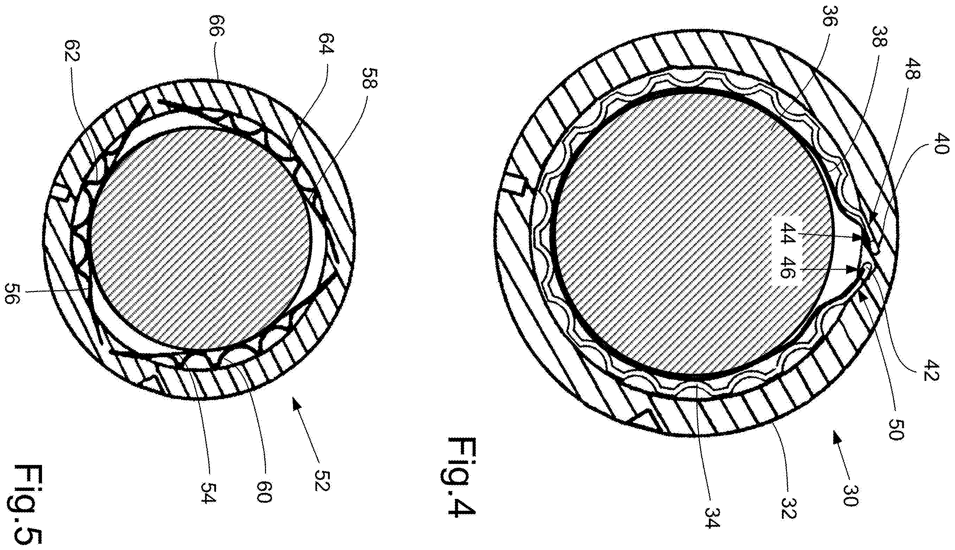

Figur 4 zeigt einen Querschnitt durch ein Folienlager 30 mit einem hülsenartigen Lagergehäuse 32, mit einer am Innenumfang des Lagergehäuses 32 angeordneten elastischen Wellfolie 34, und mit einer diese radial innen überdeckende, eine Lagerfläche für eine Welle 36 bildende Deckfolie 38. An der Innenseite des Lagergehäuses 32 sind wie in den vorangehenden Figuren zwei Stecknuten 40, 42 ausgebildet. In diese Stecknuten 40, 42 greifen sowohl die beiden Endkanten 44, 46 der Deckfolie 38 als auch die beiden Endkanten 48, 50 der Wellfolie 34 ein. Dabei liegen die Endkanten 44, 46 der Deckfolie 38 parallel an den Endkanten 48, 50 der Wellfolie 34 an. Die Stecknuten 40, 42 sind ebenfalls derart ausgebildet, dass deren Tiefe größer ist als die Einstecktiefe der zugeordneten Endkanten bei unbelasteter Folienanordnung, wobei die Stecknuten 40, 42 die genannten Endkanten mit einer Gleitpassung aufnehmen.

Es sei an dieser Stelle bemerkt, dass die Anordnung zur axialen Fixierung der Folienanordnung gemäß den Figuren 2 und 3 auch bei dem zuletzt genannten Ausführungsbeispiel vorgesehen sein kann.

Das Folienlager 30 gemäß Figur 4 ist als Einflächenlager ausgebildet. Demnach erstreckt sich eine aus der Wellfolie 34 und der Deckfolie 38 gebildete Folienanordnung über den gesamten Innenumfang des Lagergehäuses 32.

Figur 5 zeigt ein als Mehrflächenlager, im vorliegenden Fall als Dreiflächenlager ausgebildetes Folienlager 52, bei welchem drei jeweils aus einer Deckfolie 54, 56, 58 und einer zugeordneten Wellfolie 60, 62, 64 bestehende Folienanordnungen jeweils einen Umfangsabschnitt des Lagergehäuses 66 überdecken. Auch hierbei sind entweder die nicht weiter bezeichneten Endkanten der Deckfolien 54 ,56, 58 oder die jeweiligen zusammengehörenden Endkantenpaare der Deckfolien 54 ,56, 58 und der Wellfolien 60, 62, 64 in zugeordneten Stecknuten aufgenommen, die hinsichtlich ihrer Ausgestaltung und Dimensionierung den weiter vorne beschriebenen Stecknuten entsprechen.

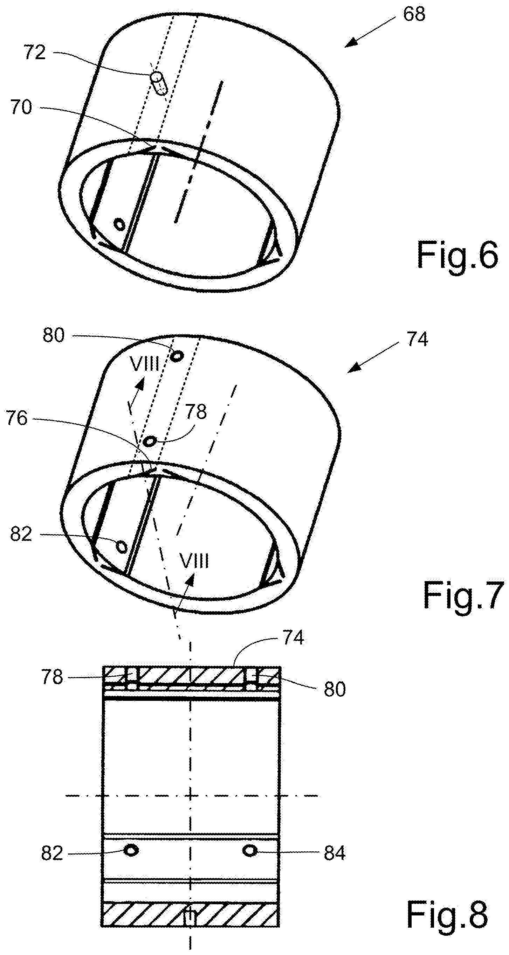

Figur 6 zeigt eine perspektivische Ansicht eines Lagergehäuses 68, in dessen Gehäusewand im Bereich einer Stecknut 70 eine radiale Bohrung 72 ausgebildet ist, in welche ein dem Bolzen 24 gemäß Figur 2 entsprechender Bolzen zur axialen Fixierung einer Folie beziehungsweise Folienanordnung steckbar ist.

Figur 7 zeigt eine perspektivische Ansicht eines Lagergehäuses 74, wobei im Bereich einer Stecknut 76 beispielhaft zwei Gewindebohrungen 78, 80 ausgebildet sind, welche die in die Stecknut 76 eingreifenden Endkanten fixierende Klemmschrauben aufnehmen können. Mittels derartiger Klemmschrauben können jeweils eine Endkante beziehungsweise ein Endkantenpaar oder auch beide Endkanten oder Endkantenpaare einer jeweiligen Folienanordnung fixiert werden.

Figur 8 zeigt einen Längsschnitt durch das Lagergehäuse 74 gemäß Figur 7 entlang der Schnittlinie VIII-VIII mit den beiden Gewindebohrungen 78, 80 sowie mit zwei einer weiteren Stecknut zugeordneten beiden Gewindebohrungen 82, 84.

**Bezugszeichenliste**

| | | | |
|---|---|---|---|
| 2 | Folienlager | 42 | Stecknut |
| 4 | Deckfolie | 44 | Endkante |
| 6 | Lagergehäuse | 46 | Endkante |
| 8 | Stecknut | 48 | Endkante |
| 10 | Stecknut | 50 | Endkante |
| 12 | Endkante | 52 | Folienlager |
| 14 | Endkante | 54 | Deckfolie |
| 16 | Deckfolie | 56 | Deckfolie |
| 17 | Stecknut | 58 | Deckfolie |
| 18 | Lagergehäuse | 60 | Wellfolie |
| 19 | Stecknut | 62 | Wellfolie |
| 20 | Endkante | 64 | Wellfolie |
| 22 | Ausnehmung | 66 | Lagergehäuse |
| 24 | Bolzen | 68 | Lagergehäuse |
| 26 | Pfeil | 70 | Stecknut |
| 28 | Pfeil | 72 | Bohrung |
| 30 | Folienlager | 74 | Lagergehäuse |
| 32 | Lagergehäuse | 76 | Stecknut |
| 34 | Wellfolie | 78 | Gewindebohrung |
| 36 | Welle | 80 | Gewindebohrung |
| 38 | Deckfolie | 82 | Gewindebohrung |
| 40 | Stecknut | 84 | Gewindebohrung |

## Patentansprüche

1. Folienlager (2, 30, 52) zum Lagern einer Welle (36), umfassend ein hülsenartiges Lagergehäuse (6,18, 32, 66, 68, 74), wenigstens eine am Innenumfang des Lagergehäuses angeordnete elastische Wellfolie (34, 60, 62, 64) und jeweils eine diese Wellfolie überdeckende, eine Lagerfläche bildende Deckfolie (4, 16, 38, 54, 56, 58), wobei an der Innenseite des Lagergehäuses (6, 18, 32, 66, 68, 74) Mittel zum Fixieren der genannten Folien in Form von an der Innenseite des Lagergehäuses (6, 18, 32, 66, 68, 74) längs der Mantellinien sich erstreckenden, schräg von innen nach außen ausgerichteten Stecknuten (8, 10, 17, 19, 40, 42, 70, 76) vorgesehen sind, die zur Aufnahme zumindest der beiden die Deckfolie (4, 16, 38, 54, 56, 58) einer jeweiligen Folienanordnung in Umfangsrichtung begrenzenden und weitgehend in Umfangsrichtung auslaufenden Endkanten (12, 14, 20, 44, 46, 48, 50) dienen, **dadurch gekennzeichnet, dass** die Enden der Stecknuten (8, 10, 17, 19, 40, 42, 70, 76) einander zugerichtet und sich nicht kreuzend mit einem Abstand zueinander angeordnet sind, wobei die Tiefe der Stecknuten (8, 10, 17, 19, 40, 42, 70, 76) größer ist als die Einstecktiefe der zugeordneten Endkanten (12, 14, 20, 44, 46, 48, 50) bei unbelasteter Deckfolie (4, 16, 38, 54, 56, 58).

2. Folienlager nach Anspruch 1, **dadurch gekennzeichnet, dass** die Stecknuten (8, 10, 17, 19, 40, 42, 70, 76) die Endkanten (12, 14, 20, 44, 46, 48, 50) mit einer Gleitpassung aufnehmen.

3. Folienlager nach Anspruch 1 oder 2, **dadurch gekennzeichnet, dass** die Wellfolien (34, 60, 62, 64) in Umfangsrichtung durch Endkanten (48, 50) begrenzt sind, die an den Endkanten (44, 46) der zugeordneten Deckfolien (38) weitgehend parallel anliegen, und dass diese Stecknuten (40, 42) so ausgebildet sind, dass sie die parallel aneinander liegenden Endkantenpaare mit Gleitpassung aufnehmen.

4. Folienlager nach einem der Ansprüche 1 bis 3, **dadurch gekennzeichnet, dass** im Bereich jeweils einer Stecknut (76) der beiden einer Folienanordnung zugeordneten Stecknuten eine oder mehrere die Gehäusewand durchsetzende Gewindebohrungen (78, 80) vorgesehen sind, welche die Endkanten in der jeweiligen Stecknut (76) fixierende Klemmschrauben aufnehmen.

5. Folienlager nach Anspruch 3, **dadurch gekennzeichnet, dass** in wenigstens einer Endkante (20) einer Deckfolie (16) oder einem Endkantenpaar einer Folienanordnung eine Ausnehmung (22) vorgesehen ist, in die ein von außen in die Wand des Lagergehäuses (18) bis in die Ausnehmung (22) ragender Bolzen (24) derart eingreift, dass er diese Endkanten in axialer Richtung (26) fixiert, deren Bewegung in Umfangsrichtung (28) jedoch nicht behindert.

6. Folienlager nach einem der Ansprüche 1 bis 5, **dadurch gekennzeichnet, dass** es als ein Einflächenlager ausgebildet ist.

7. Folienlager nach einem der Ansprüche 1 bis 5, **dadurch gekennzeichnet, dass** es als ein Mehrflächenlager ausgebildet ist.

## Claims

1. A foil bearing (2, 30, 52) for supporting a shaft (36), comprising a sleeve-like bearing housing (6, 18, 32, 66, 68, 74), at least one elastic corrugated foil (34, 60, 62, 64) being arranged on the inner circumference of the bearing housing and in each case having a cover film (4, 16, 38, 54, 56, 58) covering this corrugated film and forming a bearing surface, a means for fixing said foils on the inside of the bearing housing (6, 18, 32, 66, 68, 74) being provided in the form of insertion grooves (8, 10, 17, 19, 40, 42, 70, 76) which project obliquely along the surface lines on the inside of the bearing housing (6, 18, 32, 66, 68, 74), which serve for receiving at least the two end edges (12, 14, 20, 44, 46, 48, 50) delimiting the top foil (4, 16, 38, 54, 56, 58) of a respective foil arrangement in the circumferential direction and largely tapering in the circumferential direction, **characterized in that** the ends of the insertion grooves (8, 10, 17, 19, 40, 42, 70, 76) are arranged at a distance from one another facing and not crossing one another, wherein the depth of the insertion grooves (8, 10, 17, 19, 40, 42, 70, 76) is greater than the insertion depth of the associated end edges (12, 14, 20, 44, 46 , 48, 50) with an unloaded cover film (4, 16, 38, 54, 56, 58).

2. The foil bearing according to claim 1, **characterized in that** the insertion grooves (8, 10, 17, 19, 40, 42, 70, 76) receive the end edges (12, 14, 20, 44, 46, 48, 50) with a sliding fit.

3. The foil bearing according to Claim 1 or 2, **characterized in that** the corrugated foils (34, 60, 62, 64) are delimited in the circumferential direction by end edges (48, 50) which lie largely in parallel against the end edges (44, 46) of the associated cover foils (38), and that these insertion grooves (40, 42) are designed such that the end edge pairs lying in parallel with one another are accommodated with a sliding fit.

4. The foil bearing according to one of claims 1 through 3, **characterized in that** one or more threaded bores (78, 80) penetrating the housing wall are provided in the area of one insertion groove (76) of the two insertion grooves assigned to a film arrangement, said bores receiving the clamping screws fixing the end edges in the respective insertion groove (76).

5. The foil bearing according to claim 3, **characterized in that** in at least one end edge (20) of a cover foil (16) or an end edge pair of a foil arrangement is provided with a recess (22), into which a bolt (24) projecting from outside into the wall of the bearing housing (18) engages in the recess (22) in such a way that it fixes said end edges in the axial direction (26), but does not hinder the movement thereof in the circumferential direction (28).

6. The foil bearing according to any one of claims 1 through 5, **characterized in that** it is designed as a single-surface bearing.

7. The foil bearing according to any one of claims 1 through 5, **characterized in that** it is designed as a multi-surface bearing.

## Revendications

1. Palier à feuilles (2, 30, 52) destiné à supporter un arbre (36), comprenant un logement de palier en forme de manchon (6, 18, 32, 66, 68, 74), au moins une feuille ondulée élastique (34, 60, 62, 64) disposée sur la circonférence intérieure du logement de palier et une feuille de recouvrement (4, 16, 38, 54, 56, 58) recouvrant respectivement cette feuille ondulée et formant une surface de palier, des moyens de fixation étant prévus du côté intérieur du logement de palier (6, 18, 32, 66, 68, 74) pour fixer lesdites feuilles sous forme de rainures d'enfichage (8, 10, 17, 19, 40, 42, 70, 76) qui s'étendent le long des lignes d'enveloppe à l'intérieur du logement de palier (6, 18, 32, 66, 68, 74) et sont orientées obliquement de l'intérieur vers l'extérieur, lesquelles rainures sont destinées à recevoir au moins les deux bords d'extrémité (12, 14, 20, 44, 46, 48, 50) s'étendant dans une large mesure dans la direction circonférentielle et délimitant dans la direction circonférentielle la feuille de recouvrement (4, 16, 38, 54, 56, 58) d'un agencement de feuilles respectif, **caractérisé en ce que** les extrémités des rainures d'enfichage (8, 10, 17, 19, 40, 42, 70, 76) se font face et sont disposées à distance l'une de l'autre sans se croiser, la profondeur des rainures d'enfichage (8, 10, 17, 19, 40, 42, 70, 76) étant supérieure à la profondeur d'insertion des bords d'extrémité associés (12, 14, 20, 44, 46 , 48, 50) avec une feuille de recouvrement non chargée (4, 16, 38, 54, 56, 58).

2. Palier à feuilles selon la revendication 1, **caractérisé en ce que** les rainures d'enfichage (8, 10, 17, 19, 40, 42, 70, 76) reçoivent les bords d'extrémité (12, 14, 20, 44, 46, 48, 50) avec un ajustement coulissant.

3. Palier à feuilles selon la revendication 1 ou 2, **caractérisé en ce que** les feuilles ondulées (34, 60, 62, 64) sont délimitées dans la direction circonférentielle par des bords d'extrémité (48, 50) qui se trouvent dans une large mesure parallèlement aux bords d'extrémité (44, 46) des feuilles de recouvrement associées (38) et que ces rainures d'enfichage (40, 42) sont conçues de manière à recevoir les paires de bords d'extrémité parallèles avec un ajustement coulissant.

4. Palier à feuilles selon l'une quelconque des revendications 1 à 3, **caractérisé en ce qu'**un ou plusieurs alésages filetés (78, 80) pénétrant dans la paroi du logement sont prévus dans la zone d'une rainure d'enfichage (76) des deux rainures enfichables affectées à un agencement de feuilles, lesdits alésages recevant les bords d'extrémité dans les vis de serrage fixant la rainure d'enfichage respective (76).

5. Palier à feuilles selon la revendication 3, **caractérisé en ce que** dans au moins un bord d'extrémité (20) d'une feuille de recouvrement (16) ou une paire de bords d'extrémité d'un agencement de feuilles, un évidement (22) est prévu, dans lequel un boulon (24) faisant saillie depuis l'extérieur dans la paroi du logement de palier (18) jusque dans l'évidement (22) s'engage de telle manière qu'il fixe ces bords d'extrémité dans la direction axiale (26), mais n'entrave cependant pas leur mouvement dans la direction circonférentielle (28).

6. Palier à feuilles selon l'une quelconque des revendications 1 à 5, **caractérisé en ce qu'**il est conçu comme palier à surface unique.

7. Palier à feuilles selon l'une quelconque des revendications 1 à 5, **caractérisé en ce qu'**il est conçu comme un palier à surfaces multiples.
